Europäisches Patentamt

European Patent Office

Office européen des brevets

(11) Veröffentlichungsnummer: **0 213 402**
**A2**

## (12) EUROPÄISCHE PATENTANMELDUNG

(21) Anmeldenummer: 86110544.3

(22) Anmeldetag: 30.07.86

(51) Int. Cl.⁴: **C02F 9/00** , C02F 1/54 ,
B01D 37/00

(30) Priorität: 09.08.85 DE 3528598

(43) Veröffentlichungstag der Anmeldung:
11.03.87 Patentblatt 87/11

(84) Benannte Vertragsstaaten:
AT BE CH DE FR GB IT LI NL SE

(71) Anmelder: **BASF Aktiengesellschaft**
**Carl-Bosch-Strasse 38**
**D-6700 Ludwigshafen(DE)**

(72) Erfinder: **Gettert, Hans, Dr.**
**St.-Wendelinus-Strasse 20**
**D-6942 Moerlenbach(DE)**
Erfinder: **Kaempfer, Knut, Dr.**
**Petersstrasse 1**
**D-6700 Ludwigshafen(DE)**
Erfinder: **Sander, Bruno, Dr.**
**Moerikestrasse 10**
**D-6700 Ludwigshafen(DE)**
Erfinder: **Marquardt, Siegfried**
**Georg-Biundo-Strasse 9**
**D-6712 Bobenheim-Roxheim(DE)**
Erfinder: **Müller, K. Robert, Dr.**
**Konstanzer Strasse 43**
**D-6900 Heidelberg(DE)**

(54) **Verfahren zur Reinigung und Entsorgung von Russ- und Asche-haltigen Abwässern.**

(57) Verfahren zur Reinigung und Entsorgung von Ruß-und Asche-haltigen Abwässern, die aus Hochtemperaturprozessen stammen und in denen der Ruß in feinst verteiltem und teilweise kolloidalem Zustand vorliegt, durch Behandlung der Abwässer mit Calciumcarbonat bzw. Kalkhydrat und organischen Flockungsmitteln, zweistufige Filtration und Nachbehandlung der anfallenden Ruß-und Asche-haltigen Filterkuchen zur Sicherstellung der Deponierbarkeit.

# Verfahren zur Reinigung und Entsorgung von Ruß-und Asche-haltigen Abwässern

Die vorliegende Erfindung betrifft ein Verfahren zur Reinigung und Entsorgung von Ruß-und Asche-haltigen Abwässern, die aus Hochtemperaturprozessen stammen und in denen der Ruß in feinst verteiltem und teilweise kolloidalem Zustand vorliegt.

Bei Hochtemperaturprozessen wie z.B. bei der Erzeugung von Synthesegas durch partielle Oxidation von Ölrückständen fällt feinst verteilter Ruß an, der aus dem Prozeß ausgeschleust werden muß. Die Ausschleusung erfolgt vorwiegend durch Waschen des Ruß-haltigen Gases mit Wasser, wobei je nach Verfahrensführung Rußwässer mit 0,5 bis 5 % Rußgehalt anfallen. Der Ruß liegt im Wasser in feinst verteiltem und teilweise kolloidalem Zustand vor. Er enthält je nach Einsatzstoff 2 bis 15 Gew.% Asche, die in der Regel Schwermetalle wie Vanadin und Nickel enthält. Weitere Inhaltstoffe der Rußwässer sind Ammoniak und Sulfide. Der pH-Wert liegt zwischen 8,5 und 11.

Die Reinigung und Entsorgung dieser Rußwässer ist infolge der Feinteiligkeit des Rußes und der Toxizität der eingeschlossenen Schwermetalle problematisch. Eine Ableitung in biologische Kläranlagen ist aufgrund der chemischen Zusammensetzung in den meisten Fällen ausgeschlossen. Eine Reinigung mit Hilfe der üblichen Filtrationsverfahren scheitert an der Feinteiligkeit des Rußes. Mit den für die Abtrennung erforderlichen engmaschigen Filtergeweben werden nur äußerst geringe, wirtschaftlich nicht tragbare Filterleistungen und -standzeiten erreicht. Bei einer Aufarbeitung mit Zentrifugen werden Feststoffgehalte von höchstens 8 % im Austrag erzielt. Im Zentrat befinden sich bis zu 10 % des ursprünglichen Rußgehaltes.

Der anfallende Rußschlamm ist wegen des hohen Wassergehaltes und insbesondere wegen seiner Toxizität nicht ohne weiteres deponierfähig. Letzteres zeigen Untersuchungen solcher Rußschlämme mit dem Triphenyltetrazoliumchlorid-Test (TTC-Test, L3 der Deutschen Einheitsverfahren zur Wasseruntersuchung), sowie die Eluierbarkeit von Vanadin und Nickel mit Wasser.

Aufgabe der Erfindung war es demnach, die Ruß-haltigen Abwässer durch geeignete Maßnahmen so zu verändern bzw. zu behandeln, daß der Ruß mit Hilfe üblicher Fest-Flüssig-Trennverfahren bei hohen Durchsatzleistungen und Abscheidegraden in möglichst hoher Konzentration abzutrennen ist, so daß ein fester, stückiger, von der Konsistenz her deponierfähiger Rußrückstand entsteht.

Eine weitere Aufgabe der Erfindung bestand darin, die Toxizität des Rußrückstandes und die Eluierbarkeit von Vanadin und Nickel unter Erhalt des festen und stückigen Zustandes zu beseitigen, um die Deponierbarkeit des Rückstandes sicherzustellen.

Diese Aufgaben wurden erfindungsgemäß dadurch gelöst, daß man

a) den Abwässern Calciumcarbonat oder Kalkhydrat in einer Menge von 2 bis 10 kg/m³ zusetzt,

b) in den Abwässern wäßrige Lösungen von organischen Flockungsmitteln, bevorzugt anionaktive Flockungsmittel, innerhalb von 1 bis 2 Sekunden intensiv verteilt,

c) die geflockte Suspension in einem durchströmten Rührbehälter 30 bis 180 Sekunden lang unter Rühren bei Rührerdrehzahlen von 5 bis 20 min⁻¹ behandelt,

d) unmittelbar danach die geflockte Suspension der Schwerkraftfiltration unterwirft,

e) unmittelbar danach den erhaltenen Rußschlamm durch eine Druckfiltration im Bereich von 0,5 bis 15 bar weiterhin entwässert und

f) die erhaltenen Preßkuchen durch Besprühen oder Beträufeln mit wäßrigen Eisensalz-Lösungen, bevorzugt $FeCl_3$-Lösung, in einer Menge von 1 bis 20 kg Eisensalz (ber. 100 %) je t Filterkuchen unter Erhalt des festen und stückigen Zustandes nachbehandelt.

Nach einer weiteren Ausbildung der Erfindung wird beim Verfahrensschritt c) die geflockte Suspension in statischen Rohrmischern, die in ihrem Innern Wendeln oder Querschnittsverengungen besitzen, in weniger als 60 Sekunden behandelt und dann, wie vorher beschrieben, weiterverarbeitet.

Als Calciumcarbonat bzw. Kalkhydrat können alle handelsüblichen Produkte, vorzugsweise auch Abfallprodukte aus Fabrikationsprozessen, mit einer Teilchengröße von bis zu 0,1 mm in Form von wäßrigen Suspensionen oder auch als Festprodukte eingesetzt werden.

Die Vermischung mit dem Rußwasser erfolgt durch Einrühren in einem Rührbehälter. Im Fall von Suspensionen kann auch direkt in die Rußwasserleitung dosiert werden und in einem nachgeschalteten statischen Mischer die Vermischung erfolgen.

Durch Calciumcarbonat bzw. Kalkhydrat wird das Nickel in dem Feststoff eingebunden. Dies wirkt somit der Eluierbarkeit des Nickels entgegen.

Als organische Flockungsmittel können handelsübliche Marken eingesetzt werden. Hierbei handelt es sich um wasserlösliche, makromolekulare Verbindungen, die durch Polymerisation oder durch Copolymerisation von z.B. Acrylamid, von Acrylsäure und/oder ihren Salzen oder von Estern der Acrylsäure bzw. Methacrylsäure, die über ihre Alkoholkomponente, z.B. Aminoalkohole, speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden im Labormaßstab. Solche Methoden sind in der EP 0 008 425 beschrieben. Bei dem erfindungsgemäßen Verfahren erwiesen sich anionische Flockungsmittel als besonders geeignet. Die erforderlichen Flockungsmittelmengen liegen im Bereich von 1 bis 10 g/kg Ruß.

Die Flockungsmittel werden in Form ihrer 0,05 bis 0,2 %igen wäßrigen Lösungen eingesetzt. Die Herstellung solcher verdünnter Flockungsmittellösungen aus den festen oder flüssigen Handelsprodukten erfolgt nach bekannten Methoden in handelsüblichen Vorrichtungen.

Die Flockungsmittellösungen werden direkt in die Rußwasserleitung nach der Rußwasserpumpe zudosiert. Hierbei können Eintragshilfen wie z.B. ein Kegelmischer oder ein statischer Rohrmischer mit geringem Querschnitt vorteilhaft sein.

Nach dieser Vorvermischung erfolgt eine Vorbehandlung der Flockungsmittel-haltigen Rußwässer mit den wäßrigen 0,05 bis 0,2 %igen Flockungsmittellösungen. Die Vorbehandlung kann in einem vertikal von unten nach oben durchströmten Rührbehälter (dynamischer Flockungsreaktor) innerhalb von 0,5 bis 3 Minuten bei Rührerdrehzahlen von 5 bis 20 min$^{-1}$ erfolgen. Die Flockungsreifezeit und der günstigste Energieeintrag können nach der in der DE-A 29 20 434 beschriebenen Methode ermittelt werden.

Ebenso erfolgreich kann die Vorbehandlung in statischen Rohrmischern, die in ihrem Innern Wendeln oder Querschnittsverengungen besitzen, durchgeführt werden. Die Flockungsreifezeiten betragen in diesem Falle wegen der besonderen hydraulischen Verhältnisse weniger als 60 Sekunden. In der Regel werden mehrere Mischerelemente hintereinander geschaltet. Diese Mischstrecke (statischer Flockungsreaktor) ist dann Bestandteil der Rußwasserleitung.

Durch diese Vorbehandlung wird das Rußwasser zur optimalen Entwässerbarkeit gebracht. Für die Durchführung des erfindungsgemäßen Verfahrens ist ausschlaggebend, daß ein Flockungsmittel ausgewählt wird, das nach der Flockungsreaktion im Flockungsreaktor - (Rührbehälter oder statische Rohrmischer) eine besonders hohe Schwerkraftentwässerbarkeit der Suspension hervorruft, da die Hauptmenge des Wassers durch reine Schwerkraftfiltration abgetrennt werden soll.

Nach der beschriebenen Vorbehandlung wird das geflockte Rußwasser einer Entwässerungsvorrichtung zugeleitet und der Schwerkraftfiltration unterworfen. Als Entwässerungsvorrichtungen für die Durchführung der Schwerkraftfiltration kommen Bandfilter oder Siebtrommeln in Betracht. Das Bandfilter kann in einer bevorzugten Ausführungsform das Unterband einer Siebbandpresse sein.

Siebtrommeln bestehen aus einem zylinderförmigen Käfig, auf dessen Umfangsfläche ein Filtergewebe aufgezogen wurde. Die Filtergewebe können aus Metalldraht oder aus Synthesefasern wie z.B. Polypropylen-oder Polyesterfasern bestehen. Die Siebtrommeln können in ihrem Innern außerdem noch oberflächenerneuernde Einbauten besitzen, so daß der entstehende Rußschlamm beim Durchlauf intensiv gewendet wird. Solche Einbauten sind Leitbleche, Wehre oder Hohlwendeln. Die Verweilzeit der zu entwässernden Rußsuspension in der Siebtrommel wird außer durch die Länge des Apparates und den Durchsatz noch durch den Füllgrad bestimmt. Die Siebtrommeln arbeiten z.B. bei Drehzahlen von 1 bis 20 min$^{-1}$. Die Verweilzeiten in dieser Entwässerungsstufe betragen 1 bis 10 Minuten und insbesondere 2 bis 5 Minuten.

Durch die Schwerkraftfiltration auf den genannten Apparaten werden je nach Ausgangskonzentration und Art der Einsatzstoffe bei den Hochtemperaturprozessen bereits Feststoffgehalte bis 10 % erzielt und bis zu 88 % des Wassers abgetrennt.

Nach dieser Vorentwässerung wird der Rußschlamm einer Druckfiltration unterworfen. Es werden bevorzugt die kontinuierlich arbeitenden Druckzonen von Siebbandpressen verwendet. Filterpressen oder Membranfilterpressen sind ebenfalls geeignet.

Da die Schwerkraftfiltration in der ersten Verfahrensstufe einer Siebbandpresse, der Seihzone, durchgeführt werden kann und die zweite Verfahrensstufe einer Siebbandpresse, die Keil-und die Druckzonen, für die Druckfiltration geeignet sind, kommen für die kontinuierliche Durchführung des erfindungsgemäßen Verfahrens insbesondere Siebbandpressen in Betracht.

Der Abscheidegrad auf Siebbandpressen liegt bei mindestens 90 % des abzutrennenden Rußes. Die erhaltenen Filterkuchen sind fest und stückig und besitzen einen Feststoffgehalt von 20 bis 27 %. Sie lösen sich selbsttätig vom Filterband ab. Die Konsistenz der Filterkuchen entspricht den Anforderungen der Deponien.

Zur Überführung des vorhandenen Vanadins in eine wasserunlösliche bzw. nicht eluierbare Form wird der Filterkuchen noch mit Lösungen von Eisensalzen, bevorzugt Eisen-(III)-chlorid behandelt. Dies geschieht durch Besprühen oder Beträufeln mit 5 bis 20 %igen Lösungen der Salze. Je nach Einsatzstoff und Verfahrensführung sind 1 bis 20 kg Eisensalz (ber. 100 %) je t Filterkuchen erforderlich. Der feste, stückige Zustand der Filterkuchen kann dabei überraschenderweise erhalten werden.

Bei der Rußabtrennung mit Siebbandpressen werden die Filterkuchen kurz vor ihrem Abwurf vom Filterband auf ihrer gesamten Breite mit der Eisensalzlösung beträufelt. Die Tropfen dringen innerhalb von 1 bis 5 Sekunden in den Filterkuchen ein.

Die wäßrigen Auszüge der so hergestellten Filterkuchen (1 Teil Filterkuchen mit 4 Teilen Wasser 24 Stunden bei 25°C verrührt) entsprechen mit einem TTC-Wert von über -40, sowie Vanadin-und Nickelgehalten von weniger als 1 mg/l den Erfordernissen für die Ablagerung auf einer Deponie.

Die Erfindung wird nachfolgend anhand von Beispielen näher erläutert.

Beispiele

Bei den nachfolgenden Ausführungsbeispielen wurden Waschwässer aus einem Hochtemperaturprozeß eingesetzt -im folgenden "Rußwässer" genannt -die 0,8 bis 2 % feinst verteilten Ruß mit einem Ascheanteil von 2 bis 15 % enthielten. Die Asche bestand zu 15 bis 25 % aus Vanadin und zu 5 bis 15 % aus Nickel.

Beispiel 1

In 500 ml Rußwasser mit 2 % Ruß werden 2 g Calciumcarbonat (feinteiliges Fällprodukt aus einem Fabrikationsbetrieb mit einer mittleren Teilchengröße von 52 micrometer und einem Wassergehalt von ca. 10 %; ber. trocken) innerhalb von 1 Minute unter Rühren mit einem Blattrührer (Kantenlänge: 7 × 7 cm) eingetragen. Anschließend werden 50 ml einer 0,05 %igen Lösung eines organischen Flockungsmittels (FM) mit 20 %iger anionischer Modifizierung zugesetzt und noch 30 Sekunden bei einer Rührer-Drehzahl von 200 min$^{-1}$ weitergerührt. Daraufhin wird die Suspen sion auf eine Büchner-Nutsche von 12 cm Durchmesser mit eingelegtem Filtertuch aus Polypropylen-Leinen gegeben und einer Schwerkraftfiltration unterworfen. Es wird die Filtratmenge und der Feststoffgehalt des Filterguts in Abhängigkeit von der Filtrationszeit und der Feststoffgehalt im Filtrat bestimmt.

| Filtrations-zeit min | Filtrat-menge ml | Feststoffgehalt des Filterguts % | Feststoffgehalt des Filtrats g/l |
|---|---|---|---|
| 1 | 300 | 4,0 | - |
| 2 | 350 | 5,0 | - |
| 5 | 370 | 5,6 | 0 |

Der Filterrückstand wird in einer Labor-Stempelpresse (Filterfläche: 13,5 × 13,5 cm) zwischen 2 Filtertüchern 2 Minuten lang bei einem Druck von 10 bar einer Druckfiltration (Pressung) unterworfen. Es entsteht ein fester, formstabiler, beim Brechen in Stücke zerfallender Filterkuchen mit einem Feststoffgehalt von 26 %.

Der Filterkuchen wird auf einer Seite mit 9 g FeCl$_3$/kg Filterkuchen in Form einer 7,5 %igen wäßrigen Lösung gleichmäßig beträufelt. Die Tropfen ziehen innerhalb weniger Sekunden vollständig in den Filterkuchen ein. Der Filterkuchen behält hierbei seinen festen und stückigen Zustand. Nach 24 Stunden Lagerzeit wird ein wäßriger Auszug des Filterkuchens hergestellt und der TTC-Wert, sowie der Nickel-und Vanadingehalt geprüft.

Ergebnisse:

TTC-Wert: -10

Nickelgehalt: weniger 1 mg/l

Vanadingehalt: weniger 0,5 mg/l

Vergleichsbeispiel 1

Das Rußwasser wird wie in Beispiel 1 beschrieben behandelt, jedoch anstelle der organischen Flockungsmittellösung mit Wasser versetzt und gleichermaßen der Schwerkraftfiltration unterworfen.

Ergebnis:

| Filtrations-zeit min | Filtrat-menge ml | Feststoffgehalt des Filterguts % | Feststoffgehalt des Filtrats g/l |
|---|---|---|---|
| 1 | 90 | 2,2 | - |
| 2 | 120 | 2,3 | - |
| 5 | 220 | 3,0 | 1 |

Eine Pressung des Filterguts in einer Stempelpresse bzw. die Herstellung eines Filterkuchens war aufgrund der mangelhaften Entwässerung nicht möglich.

Vergleichsbeispiel 2

Es wird ein Ruß-Filterkuchen hergestellt wie in Beispiel 1 beschrieben, jedoch ohne $CaCO_3$-Zugabe zum Rußwasser und ohne Beträufelung des Filterkuchens mit Eisensalzlösung. Die Untersuchung des wäßrigen Auszugs dieses Filterkuchens führt zu folgenden Ergebnissen:

TTC-Wert: -60

Nickelgehalt: 4 mg/l

Vanadingehalt: 127 mg/l

Vergleichsbeispiel 3

Es wird ein Ruß-Filterkuchen hergestellt wie in Beispiel 1 beschrieben, jedoch ohne Eisensalz-Beträufelung des Filterkuchens. Die Untersuchung des wäßrigen Auszugs dieses Filterkuchens ergibt folgende Resultate:

TTC-Wert: -80

Nickelgehalt: weniger 1 mg/l

Vanadingehalt: 120 mg/l

Vergleichsbeispiel 4

Es wird ein Ruß-Filterkuchen hergestellt wie in Beispiel 1 beschrieben, jedoch ohne $CaCO_3$-Zugabe zum Rußwasser. Im wäßrigen Filterkuchen-Auszug werden folgende Werte gefunden: TTC-Wert: + 20

Nickelgehalt: 100 mg/l

Vanadingehalt: weniger 0,5 mg/l

Die Vergleichsbeispiele 1 bis 4 zeigen, daß zur Überführung des Rußwassers in eine filtrierbare Form und zur Herstellung eines festen Filterkuchens, sowie zur Sicherstellung der Deponierbarkeit des Filterkuchens der Zusatz von 3 Konditioniermitteln erforderlich ist: organische, bevorzugt anionaktive Flockungsmittel, Calciumcarbonat und Eisensalzlösung, bevorzugt $FeCl_3$-Lösung.

Beispiel 2

Es wird ein Ruß-Filterkuchen hergestellt wie in Beispiel 1 beschrieben. Anstelle von 2 g $CaCO_3$ pro 500 ml Rußwasser werden jedoch 1,5 g Kalkhydrat in Form einer 15 %igen Suspension in das Rußwasser eingerührt. Die Untersuchung des wäßrigen Auszugs dieses Filterkuchens führte zu folgenden Ergebnissen:

TTC-Wert: ± 0

Nickelgehalt: weniger 1 mg/l

Vanadingehalt: weniger 0,5 mg/l

Beispiel 3

In einem Rührbehälter wird ein 0,8 %iges Rußwasser mit 3 kg Calciumcarbonat (Spezifikation siehe Beispiel 1) je m³ Rußwasser versetzt. Die Suspension wird mit einem Volumenstrom von 5,8 m³/h einer horizontal gelagerten Siebtrommel -

(Durchmesser: 50 cm, Länge: 180 cm, Siebmaschenweite: 0,3 $\times$ 0,4 mm) zugeführt. Vor der Einleitung in die Siebtrommel werden in die Rußwasserleitung 230 l/h einer 0,1 %igen Lösung eines organischen Flockungsmittels mit 20 % anionischer Modifizierung eingespeist. Nach 2 Minuten Verweilzeit des geflockten Rußwassers in einem durchströmten Behälter mit Blattrührer - (Drehzahl: 20 min⁻¹) gelangt das Rußwasser durch freien Auslauf aus dem Behälter in die Siebtrommel (Drehzahl: 4 min⁻¹). Am Ende der Siebtrommel wird ein Rußschlamm mit einem Rußgehalt von 6,3 % ausgetragen.

88 % des Wassers werden beim Durchgang durch die Trommel entfernt. Das Siebtrommelfiltrat enthält 0,2 g Ruß/l. Der Abscheidegrad beträgt 97 %.

Vergleichsbeispiel 5

Es wird eine Siebtrommel betrieben wie in Beispiel 3 beschrieben, jedoch ohne Einspeisung eines Flockungsmittels in das Rußwasser. Nahezu das gesamte Rußwasser läuft durch das Siebgewebe hindurch. Eine Abtrennung des Rußes ist nicht möglich.

Beispiel 4

Ein Rußwasser mit einem Rußgehalt von 1,1 % wird in einem Rührkessel mit 6 kg 65 %iger wäßriger CaCO₃-Suspension je m³ Rußwasser verrührt und anschließend mit einem Volumenstrom von 5,2 m³/h einer Siebbandpresse - (Bandbreite: 0,5 m) zugeführt. Vor der Aufgabe auf das Seihband der Siebbandpresse werden in die Rußwasserleitung 230 l/h einer 0,1 %igen Lösung eines organischen Flockungsmittels mit 20 %iger anionischer Modifizierung eingespeist und durch eine Querschnittsverengung in der Leitung mit dem Rußwasser vermischt. Nach einer Verweilzeit von 30 Sekunden in der verlängerten Rohrleitung gelangt das geflockte Rußwasser auf das Seihband (Länge: 3,5 m, Bandgeschwindigkeit: 2 m/min). Hier wird innerhalb von 1 Minute ein druckstabiler Rußschlamm mit 5,0 % Rußgehalt und in der Druck-bzw. Preßzone der Siebbandpresse ein formstabiler Filterkuchen mit einem Rußgehalt von 24 % erzeugt. Der Ablauf der Entwässerungsanlage einschließlich des Bandwaschwassers enthält 0,8 g Ruß/l. Der Abscheidegrad beträgt 92 %.

Der Filterkuchen wird kurz vor der Abwurfstelle auf seiner gesamten Breite mit 7,5 %iger FeCl₃-Lösung beträufelt. Die Dosiermenge beträgt 6 g FeCl₃ (ber. 100 %) je kg Filterkuchen. Der feste und nach dem Abwurf stückige Zustand des Filterkuchens bleibt dabei erhalten.

Von einer aus dem Sammelcontainer entnommenen Filterkuchenprobe wird ein wäßriger Auszug hergestellt und auf TTC-Wert, sowie Nickel-und Vanadingehalt geprüft: TTC-Wert: + 10

Nickelgehalt: weniger 1 mg/l

Vanadingehalt: weniger 0,5 mg/l

Vergleichsbeispiel 6

Wie in Beispiel 4 beschrieben wird die Siebbandpresse mit Rußwasser beschickt, jedoch ohne Zudosierung eines Flockungsmittels in die Rußwasserleitung. Die Entwässerungsgeschwindigkeit in der Seihzone ist völlig unzureichend. Am Ende des Seihbandes ist das Rußwasser noch fließfähig und weist einen Rußgehalt von nur 1,5 % auf. Als Folge wird im Preßbereich der Maschine der größte Teil der Masse zwischen Ober-und Unterband seitlich herausgepreßt.

Ohne Zusatz von organischen Flockungsmitteln zum Rußwasser kann die Siebbandpresse nicht betrieben werden.

**Ansprüche**

1. Verfahren zur Reinigung und Entsorgung von Ruß-und Asche-haltigen Abwässern, die aus Hochtemperaturprozessen stammen und in denen der Ruß in feinst verteiltem und teilweise kolloidalem Zustand vorliegt, dadurch gekennzeichnet, daß man

a) den Abwässern Calciumcarbonat oder Kalkhydrat in einer Menge von 2 bis 10 kg/m³ zusetzt,

b) in den Abwässern wäßrige Lösungen von organischen Flockungsmitteln, bevorzugt anionaktive Flockungsmittel, innerhalb von 1 bis 2 Sekunden intensiv verteilt,

c) die geflockte Suspension in einem durchströmten Rührbehälter 30 bis 180 Sekunden lang unter Rühren bei Rührerdrehzahlen von 5 bis 20 min⁻¹ behandelt,

d) unmittelbar danach die geflockte Suspension einer Schwerkraftfiltration unterwirft,

e) unmittelbar danach den erhaltenen Rußschlamm durch eine Druckfiltration im Bereich von 0,5 bis 15 bar weiterhin entwässert und

f) die erhaltenen Preßkuchen durch Besprühen oder Beträufeln mit wäßrigen Eisensalz-Lösungen, bevorzugt FeCl$_3$-Lösung, in einer Menge von 1 bis 20 kg Eisensalz (ber. 100 %) je t Filterkuchen unter Erhalt des festen und stückigen Zustandes nachbehandelt.

2. Verfahren nach Anspruch 1, dadurch gekennzeichnet, daß man beim Verfahrensschritt c) die geflockte Suspension in statischen Rohrmischern, die in ihrem Innern Wendeln oder Querschnittsverengungen besitzen, in weniger als 60 Sekunden behandelt.